# EUROPEAN PATENT APPLICATION

(11) **EP 4 620 759 A1**
(43) Date of publication of application: **24.09.2025**
(21) Application number: 23890624.2
(22) Date of filing: 03.11.2023
(51) Int. Cl.: B60W 30/095, B60W 50/00

(54) **TRAJECTORY COLLISION RISK ASSESSMENT METHOD AND APPARATUS, AND ELECTRONIC DEVICE AND STORAGE MEDIUM**

(30) Priority: 17.11.2022 CN 202211460308
(71) Applicant: Shanghai Westwell Technology Co., Ltd., Shanghai 200050 (CN)
(72) Inventor: TAN, Limin, Shanghai 200050 (CN); SHI, Jiajun, Shanghai 200050 (CN); SUN, Yiliang, Shanghai 200050 (CN)
(74) Representative: Guardian IP Consulting I/S
(86) International application number: PCT/CN2023/129517
(87) International publication number: WO 2024/104188

(57) **Abstract**

The present invention relates to the technical field of autonomous driving. Provided are a trajectory collision risk assessment method and apparatus, and an electronic device and a storage medium. The trajectory collision risk assessment method comprises: processing an environment grid map on the basis of a driving region of interest, so as to obtain an occupancy grid map, which at least represents obstacle information of the driving region of interest; processing the occupancy grid map according to the obstacle information, so as to obtain a cost grid map, which at least represents a collision risk of the driving region of interest; obtaining a candidate trajectory set, and generating a driving envelope of a target vehicle moving along each candidate trajectory; and determining a collision risk cost of each candidate trajectory according to the driving envelope and the cost grid map. In the trajectory collision risk assessment solution of the present invention, obstacle information is densely expressed on the basis of a grid map, such that a precision loss caused by point cloud segmentation and clustering can be avoided, and on the basis of a driving envelope of a vehicle contour, a collision risk cost of a candidate trajectory can be accurately calculated.

## Description

### TECHNICAL FIELD

The present disclosure relates to the field of autonomous driving, and in particular to a trajectory collision risk assessment method, an apparatus, an electronic device and a storage medium.

### BACKGROUND

Nowadays, the process of the trajectory planning scheme widely used in the field of autonomous driving includes: generating candidate trajectories composed of polynomial curves based on point cloud data representing lanes and obstacles in a laser point cloud, combined with a vehicle state; performing a collision risk cost assessment on a batch of generated candidate trajectories; performing kinematic performance constraint detection and precise collision detection on the candidate trajectories based on the collision risk cost, selecting the candidate trajectory with the lowest cost that passes the detection, and using the selected trajectory as a direct trajectory output or as an input for more refined trajectory post-optimization.

Specifically, when performing the collision risk cost assessment on the candidate trajectories, the aforementioned trajectory planning scheme has the following two deficiencies:

On one hand, when making decisions on the direction of obstacle avoidance (i.e., determining whether the vehicle should bypass an obstacle from the left or the right), most methods are based on obstacles represented as polygons, which relies on a front-end perception module to perform segmentation and clustering of point cloud data, and the perception module incurs accuracy loss in the process of dividing obstacle point clouds into polygons.

On the other hand, when calculating the collision risk, the estimation of collision risk cost is typically based on points along the candidate trajectory, that is, the vehicle's center point while traveling along the candidate trajectory. This is a relatively coarse estimation method because the distance from the vehicle's center point to an obstacle cannot accurately represent the vehicle's collision risk.

It should be noted that the information disclosed in the background is only used to facilitate the understanding of the background of the present disclosure, and therefore may include information that does not constitute the prior art known to those skilled in the field.

### SUMMARY

Concerning the problems in the prior art, the present disclosure provides a trajectory collision risk assessment method, an apparatus, an electronic device and a storage medium, which densely represents obstacle information based on a grid map, facilitates decisions on the direction of obstacle avoidance, and avoids accuracy loss caused by point cloud segmentation and clustering. Furthermore, performing collision risk cost assessment based on a driving envelope of a vehicle contour moving along a candidate trajectory enables accurate calculation of the collision risk cost, thereby supporting more refined trajectory planning based on obstacle avoidance.

According to one aspect of the present disclosure, a trajectory collision risk assessment method is provided, which includes: processing an environment grid map based on a driving region of interest to obtain an occupancy grid map, which at least represents obstacle information of the driving region of interest; processing the occupancy grid map according to the obstacle information to obtain a cost grid map, which at least represents a collision risk of the driving region of interest; obtaining a candidate trajectory set, and generating a driving envelope of a target vehicle moving along each candidate trajectory; determining a collision risk cost of each candidate trajectory according to the driving envelope and the cost grid map.

In some embodiments, the trajectory collision risk assessment method further includes the following steps performed before processing the environment grid map: based on contour information of the target vehicle and lane information of a current lane, generating a vehicle coverage area for the target vehicle traveling along the current lane; based on lane information of an adjacent lane of the current lane, expanding the vehicle coverage area to generate the driving region of interest.

In some embodiments, each grid of the environment grid map has an initial probability, wherein processing of the environment grid map includes: based on a relationship between a probability of each grid of the environment grid map and a probability threshold, converting the environment grid map into an occupancy grid map, such that in the occupancy grid map, probabilities of at least grids corresponding to obstacles within the driving region of interest and a side boundary of the driving region of interest are set to a target probability value representing a presence of obstacles.

In some embodiments, after converting the environment grid map into the occupancy grid map, the trajectory collision risk assessment method further includes: performing morphological processing on the occupancy grid map, such that probabilities of grids associated with grids corresponding to obstacles within the driving region of interest are set to the target probability value; and performing smoothing processing on edges of a grid block corresponding to the target probability value, such that probabilities of grids newly added to the grid block after the smoothing processing are set to the target probability value.

In some embodiments, the obstacle information includes grids corresponding to obstacles within the driving region of interest and a side boundary of the driving region of interest, wherein the grids have a target probability value that represents the presence of an obstacle; wherein processing of the occupancy grid map includes: based on the target probability value, performing a connected component search on the occupancy grid map; based on connected components obtained from the search, determining a dependency relationship between the obstacles within the driving region of interest and the side boundary of the driving region of interest; based on the dependency relationship, generating a cost grid map that at least represents a collision risk of the driving region of interest.

In some embodiments, determining the dependency relationship between the obstacles within the driving region of interest and the side boundary of the driving region of interest includes: using each connected component obtained from the search as a node, establishing edges between the nodes, wherein a cost of each edge is determined based on a shortest distance between the corresponding two connected components; removing edges whose cost satisfies a cost threshold, and determining the dependency relationship based on a result of the removal.

In some embodiments, generating the cost grid map that at least represents the collision risk of the driving region of interest includes: obtaining a grid block corresponding to connected components representing obstacles within the driving region of interest; setting probabilities of grids covered by a projection area, where the grid block is projected toward the associated side boundary, to the target probability value; and processing the occupancy grid map using a Gaussian kernel to obtain the cost grid map that at least represents the collision risk of the driving region of interest; wherein in the cost grid map, a collision risk cost of each grid is negatively correlated with a distance from the grid to an obstacle grid corresponding to the target probability value.

In some embodiments, generating the driving envelope for the target vehicle moving along each candidate trajectory includes: estimating an execution pose error for each trajectory point of the candidate trajectory based on trajectory information of each candidate trajectory; generating an envelope frame for the target vehicle at each trajectory point of the current candidate trajectory based on contour information of the target vehicle and the execution pose error of each trajectory point of a current candidate trajectory; connecting the envelope frames to generate a current driving envelope for the target vehicle moving along the current candidate trajectory, the current driving envelope being composed of multiple linear envelope segments.

In some embodiments, estimating the execution pose error for each trajectory point of the candidate trajectory includes: based on a curvature and a velocity of the candidate trajectory, estimating the execution pose error for each trajectory point of the candidate trajectory by an autoregressive moving average model.

In some embodiments, the current driving envelope for the target vehicle moving along a current candidate trajectory includes multiple linear envelope segments, each linear envelope segment corresponding to a trajectory point of the current candidate trajectory; wherein determining the collision risk cost of each candidate trajectory includes: projecting the current driving envelope onto the cost grid map; based on the collision risk cost of grids traversed by each linear envelope segment of the current driving envelope in the cost grid map, determining the collision risk cost of each linear envelope segment; based on the collision risk cost of each linear envelope segment of the current driving envelope, determining the collision risk cost of the current candidate trajectory.

In some embodiments, determining the collision risk cost of each linear envelope segment includes taking a highest collision risk cost of grids traversed by each linear envelope segment as the collision risk cost of the corresponding linear envelope segment; wherein determining the collision risk cost of the current candidate trajectory includes taking an average collision risk cost of the linear envelope segments of the current driving envelope as the collision risk cost of the current candidate trajectory.

In some embodiments, after determining the collision risk cost of each candidate trajectory, the trajectory collision risk assessment method further includes: obtaining a linear envelope segment whose collision risk cost exceeds a first threshold, from the driving envelope corresponding to the candidate trajectory with a minimum collision risk cost; adjusting a trajectory point corresponding to the linear envelope segment whose collision risk cost exceeds the first threshold; generating a target trajectory based on the candidate trajectory with the minimum collision risk cost and the adjusted trajectory point.

In some embodiments, adjusting the trajectory point corresponding to the linear envelope segment whose collision risk cost exceeds the first threshold includes: obtaining a collision risk cost of two sidelines of a current linear envelope segment whose collision risk cost exceeds the first threshold; moving the trajectory point corresponding to the current linear envelope segment toward a target direction by a target amount; wherein the target direction is a direction from a sideline of the current linear envelope segment with a higher collision risk cost to a sideline with a lower collision risk cost, and the target amount is related to an execution pose error of the trajectory point corresponding to the current linear envelope segment.

In some embodiments, after determining the collision risk cost of each candidate trajectory, the trajectory collision risk assessment method further includes: in response to the collision risk cost of all candidate trajectories being higher than a second threshold, generating a projection envelope for an actual projection of the target vehicle moving along each candidate trajectory; determining the collision risk cost of each candidate trajectory based on the projection envelope and the cost grid map.

According to another aspect of the present disclosure, a trajectory collision risk assessment apparatus applied to the trajectory collision risk assessment method is provided, which includes: an environment grid map processing module, configured to process an environment grid map based on a driving region of interest to obtain an occupancy grid map , which at least represents obstacle information of the driving region of interest; a cost grid map generation module, configured to process the occupancy grid map according to the obstacle information to obtain a cost grid map, which at least represents a collision risk of the driving region of interest; a driving envelope generation module, configured to obtain a candidate trajectory set, and generate a driving envelope of a target vehicle moving along each candidate trajectory; a trajectory collision risk estimation module, configured to determine a collision risk cost of each candidate trajectory according to the driving envelope and the cost grid map.

According to another aspect of the present disclosure, an electronic device is provided, which includes: a processor; a memory configured to store executable instructions of the processor; wherein the processor is configured to execute the steps of the trajectory collision risk assessment method by executing the executable instructions.

According to another aspect of the present disclosure, a computer-readable storage medium used for storing program is provided, wherein the trajectory collision risk assessment method is realized when the program is executed by a processor.

Compared with the related art, the present disclosure has at least the following beneficial effects:

The trajectory collision risk assessment solution of the present disclosure obtains an occupancy grid map that represents obstacle information of a driving region of interest by processing an environment grid map, thereby achieving dense representation of obstacle information based on the grid map. Based on the occupancy grid map, decisions on the direction of obstacle avoidance can be made, obtaining a cost grid map that represents a collision risk of the driving region of interest, which avoids reliance on point cloud segmentation and clustering, thus preventing accuracy loss in the process of dividing obstacle point clouds into polygons.

Furthermore, the trajectory collision risk assessment solution of the present disclosure enables more accurate calculation of the collision risk cost by performing collision risk cost assessment based on a driving envelope of a vehicle contour moving along a candidate trajectory. Particularly in narrow scenarios where the vehicle size is close to the passable area, utilizing the driving envelope instead of the vehicle center trajectory line for collision risk cost assessment allows for more precise calculation of the collision risk cost, thus supporting more refined trajectory planning based on obstacle avoidance.

It should be understood that the above general description and the following detailed description are only exemplary and explanatory, and do not limit the present disclosure.

### BRIEF DESCRIPTION OF THE DRAWINGS

The drawings herein are incorporated into and form a part of the specification, and illustrate embodiments consistent with the present disclosure. The drawings are used together with the specification to explain the principles of the present disclosure. It is apparent that the drawings in the following description are merely illustrative of some embodiments of the present disclosure. For those skilled in the art, other drawings can be obtained based on these drawings without inventive effort.
FIG. 1 is a flowchart of a trajectory collision risk assessment method according to an embodiment of the present disclosure.
FIG. 2 is a schematic view of processing the environment grid map according to an embodiment of the present disclosure.
FIG. 3 is a flowchart of the steps for processing the occupancy grid map according to an embodiment of the present disclosure.
FIG. 4 is a schematic view of generating the cost grid map according to an embodiment of the present disclosure.
FIG. 5 is a flowchart of generating the driving envelope according to an embodiment of the present disclosure.
FIG. 6 is a schematic view of generating the current driving envelope according to an embodiment of the present disclosure.
FIG. 7 is a flowchart of determining the collision risk cost of the candidate trajectories according to an embodiment of the present disclosure.
FIG. 8 is an implementation flowchart of a trajectory collision risk assessment method according to an embodiment of the present disclosure.
FIG. 9 is a flowchart of generating the target trajectory according to an embodiment of the present disclosure.
FIG. 10 is a structural schematic view of a trajectory collision risk assessment apparatus according to an embodiment of the present disclosure.
FIG. 11 is a structural schematic view of an electronic device according to an embodiment of the present disclosure.

### DETAILED DESCRIPTION

Exemplary embodiments will now be described more comprehensively with reference to the drawings. However, these exemplary embodiments can be implemented in various forms and should not be construed as being limited to the embodiments described herein. Rather, these embodiments are provided such that the present disclosure will be comprehensive and complete, and the concept of the exemplary embodiments will be fully communicated to those skilled in the art.

The drawings are merely exemplary illustrations of the present disclosure, and are not necessarily drawn to scale. The same reference numerals in the drawings denote the same or similar parts, and a repetitive description thereof will be omitted. Some of the block diagrams shown in the drawings are functional entities and do not necessarily correspond to physically or logically independent entities. These functional entities may be implemented in the form of software, or implemented in one or more hardware modules or integrated circuits, or implemented in different networks and/or processor devices and/or microcontroller devices.

In addition, the process shown in the drawings is merely an exemplary illustration and does not necessarily include all steps. For example, some steps may be decomposed, some steps may be merged or partially merged, and the actual execution order may change based on practical circumstances. It should be noted that the embodiments of the present disclosure and features according to different embodiments may be combined with each other if there is no conflict.

The trajectory collision risk assessment solution of the present disclosure is applicable to trajectory planning in the field of autonomous driving, such as for mobile robots and unmanned vehicles, specifically performing collision risk cost assessment on candidate trajectories to address obstacle avoidance, particularly obstacle avoidance in narrow spaces.

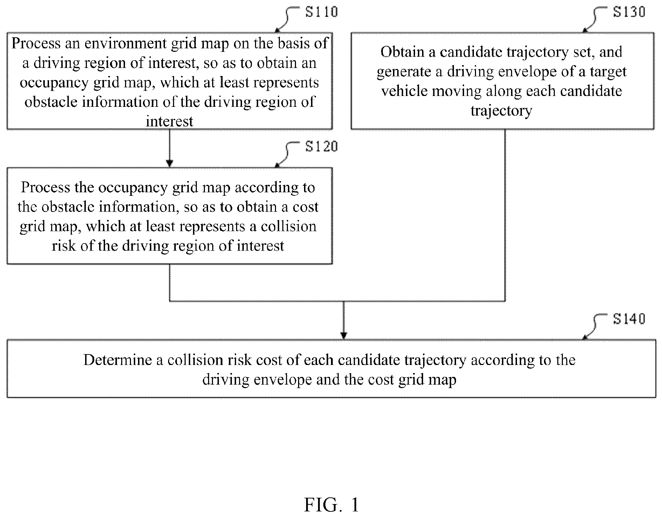

FIG. 1 shows the main steps of a trajectory collision risk assessment method according to an embodiment. As shown in FIG. 1, the trajectory collision risk assessment method provided in the embodiment includes the following steps:

S110, processing an environment grid map based on a driving region of interest to obtain an occupancy grid map, which at least represents obstacle information of the driving region of interest.

The driving region of interest refers to the approximate range that the vehicle is allowed to cover during driving, which can be obtained by combining vehicle size and control error. The environment grid map is generated based on environmental point cloud data, such as environmental point cloud data collected by a lidar in front of the vehicle. By processing the environment grid map, an occupancy grid map that represents obstacle information of the driving region of interest is obtained, thereby achieving dense representation of obstacle information based on the grid map.

S120, processing the occupancy grid map according to the obstacle information to obtain a cost grid map, which at least represents a collision risk of the driving region of interest.

Based on the occupancy grid map, decisions on the direction of obstacle avoidance can be made, which is also referred to as decisions of obstacle-to-road boundary dependency. A cost grid map representing the collision risk of the driving region of interest can also be obtained. This enables decisions on the direction of obstacle avoidance to be made based on the dense representation of obstacle information in the grid map, thereby avoiding reliance on point cloud segmentation and clustering, and further preventing accuracy loss incurred during the process of dividing obstacle point clouds into polygons.

S130, obtaining a candidate trajectory set, and generating a driving envelope of a target vehicle moving along each candidate trajectory.

The collision risk is essentially determined by the edge contour of the vehicle body, rather than by the distance relationship between the vehicle center and an obstacle. Particularly in cases where the proportion of drivable space relative to the vehicle volume is small, that is, in narrow spaces, when the center point remains unchanged but the attitude angle changes, the distance from the vehicle's outer contour to the obstacle may vary significantly. Generating a driving envelope of the target vehicle moving along each candidate trajectory facilitates the subsequent precise calculation of the collision risk based on the driving envelope.

S140, determining a collision risk cost of each candidate trajectory according to the driving envelope and the cost grid map.

Performing collision risk cost assessment based on a driving envelope of a vehicle contour moving along a candidate trajectory and a cost grid map that precisely represents the collision risk cost, enables accurate calculation of the collision risk cost. Particularly in narrow scenarios where the vehicle size is close to the passable area, utilizing the driving envelope instead of the vehicle center trajectory line for collision risk cost assessment allows for more precise calculation of the collision risk cost, thus supporting more refined trajectory planning based on obstacle avoidance.

In an embodiment, the method further includes the following steps performed before processing the environment grid map: based on contour information of the target vehicle and lane information of a current lane, generating a vehicle coverage area for the target vehicle traveling along the current lane; based on lane information of an adjacent lane of the current lane, expanding the vehicle coverage area to generate the driving region of interest.

The contour information of the target vehicle may include, for example, a two-dimensional bounding box of the target vehicle. The lane information of the current lane may include, for example, the side boundaries and the lane centerline of the current vehicle. Based on the contour information of the target vehicle and the lane information of the current lane, the approximate range covered by the vehicle body when the target vehicle travels along the current lane can be generated, that is, the vehicle coverage area. The lane information of adjacent lanes may include, for example, whether there are adjacent same-direction and opposite-direction lanes on both sides of the current lane, as well as the conditions of the adjacent same-direction/opposite-direction lanes (including lane width, etc.). Based on the conditions of adjacent lanes, the intrusion range allowing the target vehicle to encroach into adjacent lanes when borrowing lanes on both sides can be calculated. The intrusion range can also be configured within the permissible condition range based on information from a high precision map. By combining the lane information of adjacent lanes and the vehicle coverage area of the target vehicle, for example, by extending the vehicle coverage area to both sides by the amount of the intrusion range, a region of interest (ROI) can be formed, that is, the driving region of interest.

In an embodiment, each grid of the environment grid map has an initial probability, wherein processing of the environment grid map includes: based on a relationship between a probability of each grid of the environment grid map and a probability threshold, converting the environment grid map into an occupancy grid map, such that in the occupancy grid map, probabilities of at least grids corresponding to obstacles within the driving region of interest and a side boundary of the driving region of interest are set to a target probability value representing a presence of obstacles.

The environment grid map is a probabilistic grid map generated based on environmental point cloud data collected by a lidar, and its generation method is conventional and is not limited by the present disclosure. Based on the relationship between the probability of each grid in the environment grid map and a probability threshold, the probability of grids with an initial probability greater than or equal to the probability threshold can be set to 1, that is, the target probability value, thereby achieving obstacle extraction in the ROI region of the probabilistic grid map. Furthermore, the probabilities of the left and right boundaries of the ROI region and the grids outside the ROI region are also set to 1 to indicate that intrusion by the vehicle contour is not desired under any circumstances.

Thus, the obstacle information represented by the occupancy grid map includes: grids corresponding to obstacles within the driving region of interest, grids corresponding to the side boundaries of the driving region of interest, and grids outside the driving region of interest, all having a target probability value of 1 indicating the presence of obstacles.

Furthermore, In an embodiment, after converting the environment grid map into the occupancy grid map based on the probability threshold, the method further includes: performing morphological processing on the occupancy grid map, such that probabilities of grids associated with grids corresponding to obstacles within the driving region of interest are set to the target probability value; and performing smoothing processing on edges of a grid block corresponding to the target probability value, such that probabilities of grids newly added to the grid block after the smoothing processing are set to the target probability value.

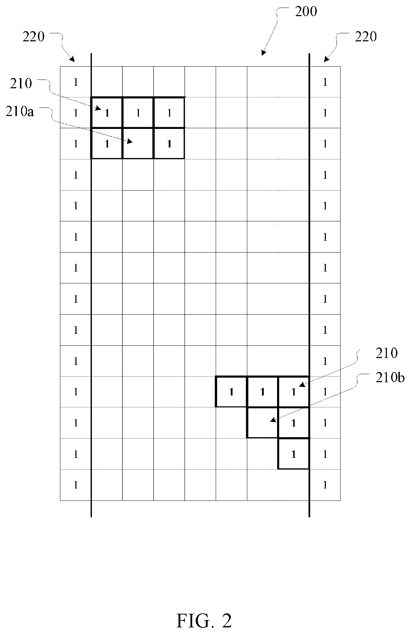

FIG. 2 shows a schematic view of processing the environment grid map according to an embodiment. As shown in FIG. 2, after converting the environment grid map into the occupancy grid map, the following are set to a target probability value of 1 indicating the presence of obstacles: the obstacle grids 210 within the driving region of interest 200, and the grids 220 outside the driving region of interest 200 (including side boundary grids and peripheral grids, with peripheral grids not fully shown). Based on the occupancy grid map, post-processing steps are performed: First, based on a morphological method, the cavities and gaps in the obstacle grids 210 caused by point cloud occlusion are filled, so that the probability of grids associated with the obstacle grids 210 (e.g., a grid 210a within the left obstacle grid 210 shown in FIG. 2) is set to a target probability value of 1. Then, the edges of the grid block corresponding to the obstacle grids 210 are smoothed, so that the probability of newly added grids in the smoothed grid block (e.g., a grid 210b within the right obstacle grid 210 shown in FIG. 2) is set to a target probability value of 1.

The occupancy grid map can accurately represent obstacle information in the driving region of interest, facilitating subsequent processing to generate a cost grid map that represents collision risk.

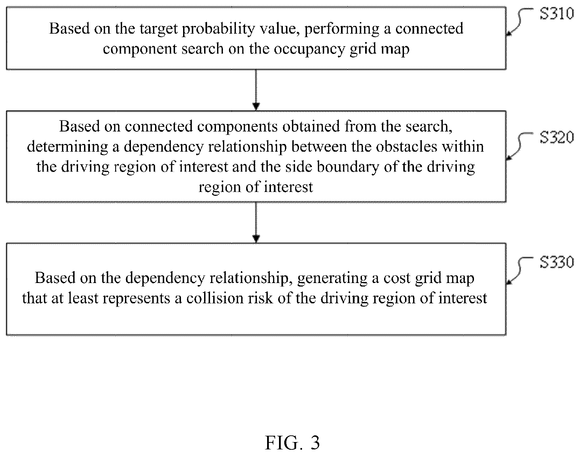

FIG. 3 shows the main steps of processing the occupancy grid map according to an embodiment. As shown in FIG. 3, in this embodiment, processing the occupancy grid map according to the obstacle information includes the following steps:

S310, based on the target probability value, performing a connected component search on the occupancy grid map.

Based on the occupancy grid map, connected components are searched. Each connected component represents one or more spatially connected obstacles. The spatial connection may refer to adjacent grids or grids separated by a distance less than a certain threshold range, which can be set as required. Furthermore, the left and right side boundary grids of the driving region of interest and their connected peripheral grids are also regarded respectively as connected components.

S320, based on connected components obtained from the search, determining a dependency relationship between the obstacles within the driving region of interest and the side boundary of the driving region of interest.

Based on the connected components, the dependency relationship between an obstacle and its corresponding side boundary can be more directly determined.

S330, based on the dependency relationship, generating a cost grid map that at least represents a collision risk of the driving region of interest.

Based on the dependency relationship, the cost grid map can be conveniently generated to represent the collision risk of each grid in the driving region of interest.

In an embodiment, determining the dependency relationship between the obstacles within the driving region of interest and the side boundary of the driving region of interest based on connected components obtained from the search includes the following steps: using each connected component obtained from the search as a node, establishing edges between the nodes, wherein a cost of each edge is determined based on a shortest distance between the corresponding two connected components; removing edges whose cost satisfies a cost threshold, and determining the dependency relationship based on a result of the removal.

Each connected component is designated as a node, and edges are established between all nodes, with the cost of each edge determined by the Euclidean distance between the closest grids of the two connected components connected by the edge. On the graph with the aforementioned nodes and edges, the Graph-Cut algorithm can be used to remove edges that exceed a cost threshold. Such edges are also referred to as vehicle-passable edges. If the graph cannot be divided into two graphs, it indicates that the road is completely blocked, and the avoidance maneuver is abandoned; if it can be divided into two graphs, the dependency relationship between obstacles and side boundaries can be directly obtained based on the two resulting graphs.

In an embodiment, generating the cost grid map that at least represents the collision risk of the driving region of interest based on the dependency relationship includes the following steps: obtaining a grid block corresponding to connected components representing obstacles within the driving region of interest; setting probabilities of grids covered by a projection area, where the grid block is projected toward the associated side boundary, to the target probability value; and processing the occupancy grid map using a Gaussian kernel to obtain the cost grid map that at least represents the collision risk of the driving region of interest. In the cost grid map, a collision risk cost of each grid is negatively correlated with a distance from the grid to an obstacle grid corresponding to the target probability value.

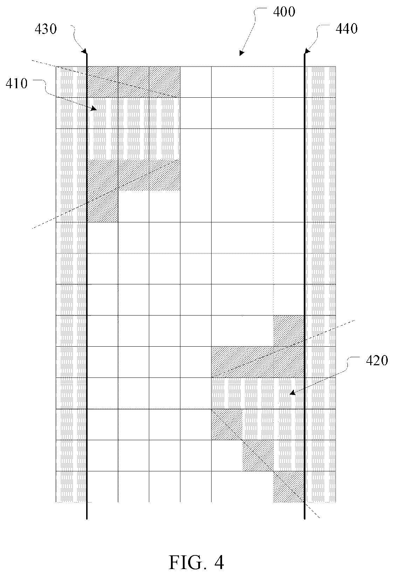

FIG. 4 shows a schematic view of generating the cost grid map according to an embodiment. As shown in FIG. 4 and FIG. 2, in this embodiment, after the aforementioned connected components search and edge removal, the following were obtained: the left obstacle block 410 which is attributed to the left boundary 430 of the driving region of interest 400; the right obstacle block 420 which is attributed to the right boundary 440 of the driving region of interest 400; and the grid blocks corresponding to the connected components representing obstacles within the driving region of interest 400, which include the left obstacle block 410 and the right obstacle block 420 (in FIG. 4, the left obstacle block 410, the right obstacle block 420, the left boundary 430, and the right boundary 440 are indicated with dotted shading). The projection method of grid blocks toward their corresponding side boundaries can be set as required. For example, as indicated by the dashed lines in FIG. 4, the corner points of the grid blocks facing their corresponding side boundaries can be projected with a certain slope to the corresponding side boundaries. Furthermore, based on the projection results, the probability of grids covered by the projection area (indicated by diagonal shading) is set to a target probability value of 1. This implements setting the projection area of the obstacle blocks toward their corresponding side boundaries as occupied, based on the dependency relationship, to indicate that bypassing from this side is not permissible.

In addition to setting the projection method by slope, the projection length can also be set according to parameters such as vehicle width, which can be adjusted as required, as long as a certain margin is ensured to avoid vehicle collisions.

Finally, a Gaussian kernel is used to process and obtain the cost grid map. In the cost grid map, the grids representing obstacles (including obstacle grids within the driving region of interest 400, side boundary grids and peripheral grids of the driving region of interest 400) have the highest collision risk, and the collision risk of non-obstacle grids is negatively correlated with their distance to the nearest grid representing an obstacle.

The representation form of the cost grid map can use probability values to express the collision risk of each grid, or use parameters such as grayscale/intensity, which are positively correlated with collision risk, to express the collision risk of each grid. These forms can be set as required.

The generated cost grid map can be used for subsequent calculation of the collision risk cost of candidate trajectories.

The candidate trajectory set can be generated based on existing trajectory planning schemes, which is not limited by the present disclosure.

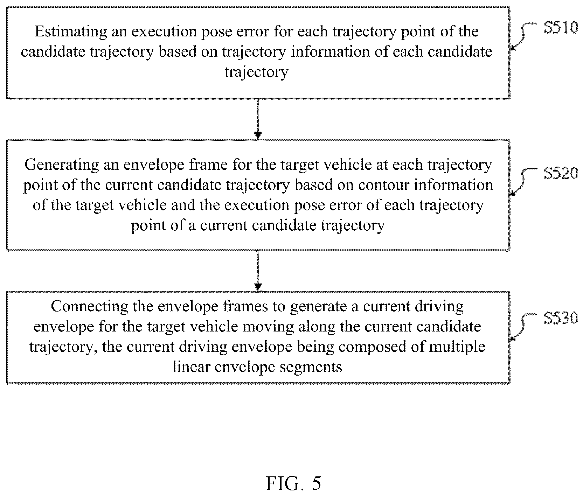

FIG. 5 shows the main steps of generating the driving envelope according to an embodiment. As shown in FIG. 5, in this embodiment, generating the driving envelope for the target vehicle moving along each candidate trajectory includes the following steps:

S510, estimating an execution pose error for each trajectory point of the candidate trajectory based on trajectory information of each candidate trajectory.

Due to the non-ideality of the vehicle system and noise in the environmental perception module, the control module's trajectory tracking will inevitably have certain errors. By estimating the attitude error that the control module may produce during trajectory execution, which means estimating the execution attitude error of each trajectory point of the candidate trajectory, the subsequently generated driving envelope can represent the state of the vehicle moving along the trajectory more accurately.

In an embodiment, estimating the execution pose error for each trajectory point of the candidate trajectory can specifically include: based on a curvature and a velocity of the candidate trajectory, estimating the execution pose error for each trajectory point of the candidate trajectory by an autoregressive moving average model (NARMAX model). The NARMAX model takes the curvature and velocity information of a candidate trajectory as input and outputs the attitude error that the control module may produce during the execution of the candidate trajectory, that is, the execution attitude error of each trajectory point of the candidate trajectory.

S520, generating an envelope frame for the target vehicle at each trajectory point of the current candidate trajectory based on contour information of the target vehicle and the execution pose error of each trajectory point of a current candidate trajectory.

The contour information of the target vehicle may include a two-dimensional bounding box of the target vehicle. Specifically in practical application, several key points on the two-dimensional bounding box, such as four corner points, may be selected. When generating an envelope frame for the target vehicle at a trajectory point, the two-dimensional bounding box of the target vehicle at the trajectory point may be extended based on the execution pose error of the target vehicle at the trajectory point to generate an envelope frame expressed as a square frame.

Wherein, the two-dimensional bounding box of the target vehicle at a trajectory point can be specifically determined according to the contour information of the target vehicle and the trajectory information of the corresponding candidate trajectory, which is a conventional technology.

S530, connecting the envelope frames to generate a current driving envelope for the target vehicle moving along the current candidate trajectory, the current driving envelope being composed of multiple linear envelope segments.

The driving envelope indicates the range of areas that the target vehicle may occupy while traveling along a candidate trajectory. For each candidate trajectory, the left sideline and right sideline of the envelope frame of the target vehicle at each trajectory point of the candidate trajectory are respectively connected to generate the driving envelope of the target vehicle moving along the candidate trajectory. The driving envelope of the target vehicle moving along each candidate trajectory is composed of multiple linear envelope segments, wherein each linear envelope segment corresponds to a trajectory point of the candidate trajectory, and each linear envelope segment specifically includes the left sideline and right sideline of the envelope frame of the target vehicle at the corresponding trajectory point.

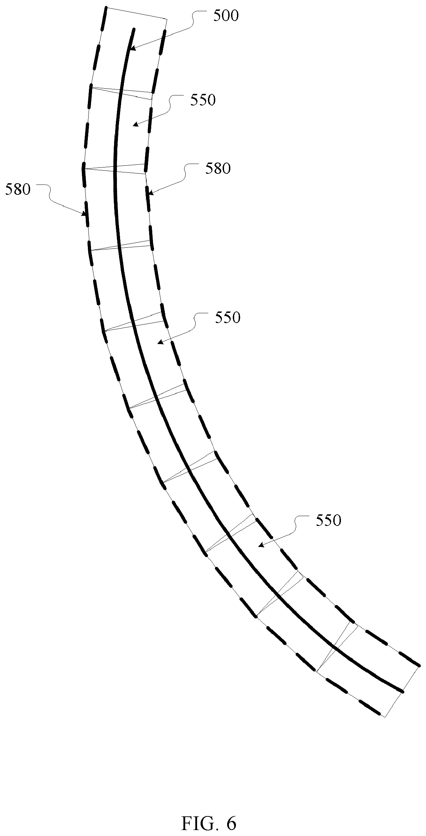

FIG. 6 shows a schematic view of generating the current driving envelope according to an embodiment. As shown in FIG. 6, for a current candidate trajectory 500, as a first step, based on the execution pose error of each trajectory point thereof and the contour information of the target vehicle, an envelope frame 550 of the target vehicle at each trajectory point of the current candidate trajectory 500 is generated. Then, the envelope frames 550 are connected to generate a current driving envelope 580 of the target vehicle moving along the current candidate trajectory 500.

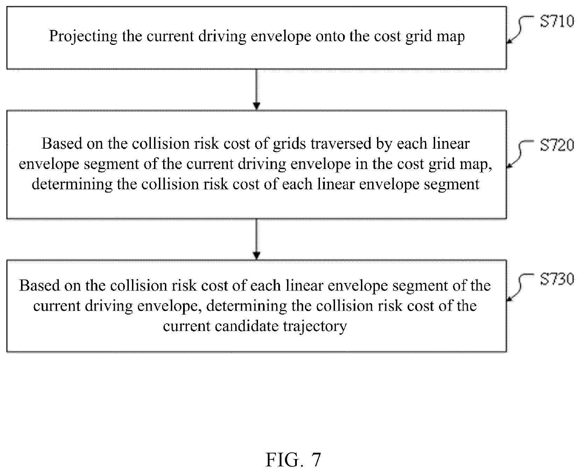

FIG. 7 shows the main steps of determining the collision risk cost of candidate trajectories according to an embodiment. As shown in FIG. 7, determining a collision risk cost of each candidate trajectory according to the driving envelope and the cost grid map includes the following steps:

S710, projecting the current driving envelope onto the cost grid map.

The current driving envelope can be projected onto the cost grid map based on the coordinate position information of the current driving envelope to obtain the position relationship between the current driving envelope and each collision risk cost grid.

S720, based on the collision risk cost of grids traversed by each linear envelope segment of the current driving envelope in the cost grid map, determining the collision risk cost of each linear envelope segment.

When determining the collision risk cost of each linear envelope segment, the highest collision risk cost of the grids traversed by each linear envelope segment may be taken as the collision risk cost of the corresponding linear envelope segment. It should be noted that the calculation method for the collision risk cost of the linear envelope segment can be adjusted accordingly depending on different scenario requirements. For example, a weighted calculation can be performed on the collision risk cost of the grids traversed by each linear envelope segment under certain conditions to obtain the collision risk cost of each linear envelope segment.

S730, based on the collision risk cost of each linear envelope segment of the current driving envelope, determining the collision risk cost of the current candidate trajectory.

When determining the collision risk cost of the current candidate trajectory, the average collision risk cost of the linear envelope segments of the current driving envelope may be taken as the collision risk cost of the current candidate trajectory. It should be noted that the calculation method for the collision risk cost of the candidate trajectory can be adjusted accordingly depending on different scenario requirements. For example, a weighted calculation can be performed on the collision risk cost of each linear envelope segment under certain conditions to obtain the collision risk cost of the candidate trajectory.

The calculated collision risk cost of the candidate trajectory will be used for further trajectory selection.

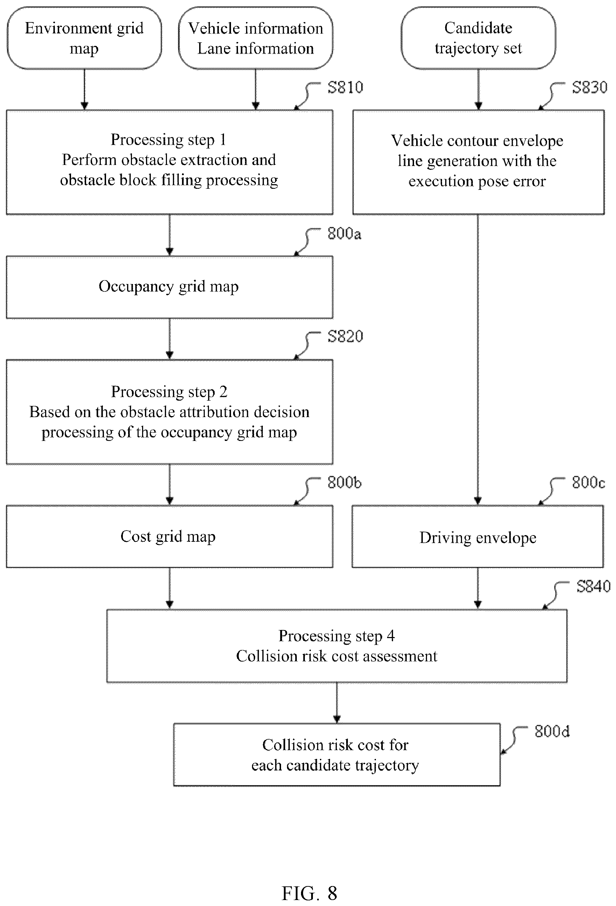

FIG. 8 shows an implementation flowchart of a trajectory collision risk assessment method according to an embodiment of the present disclosure. As shown in FIG. 8, and in conjunction with the descriptions of the above embodiments, the implementation flow of the trajectory collision risk assessment method in this embodiment includes four processing steps:

S810, processing step 1, based on the environment grid map, vehicle information, and lane information, perform obstacle extraction and obstacle block filling processing based on the driving region of interest to obtain an occupancy grid map 800a that represents the obstacle information of the driving region of interest.

S820, processing step 2, based on the obstacle attribution decision processing of the occupancy grid map, obtain a cost grid map 800b that represents the collision risk of the driving region of interest.

S830, processing step 3, based on the candidate trajectory set, perform vehicle contour envelope line generation with the execution pose error to obtain a driving envelope 800c of the target vehicle moving along the candidate trajectory.

S840, processing step 4, based on the driving envelope 800c and the cost grid map 800b, perform collision risk cost assessment to obtain the collision risk cost 800d for each candidate trajectory.

The aforementioned trajectory collision risk assessment scheme, by processing the environment grid map, obtains an occupancy grid map representing the obstacle information of the driving region of interest, thereby achieving a dense representation of obstacle information based on the grid map. Based on the occupancy grid map, decisions regarding obstacle avoidance directions can be made, and a cost grid map representing the collision risk of the driving region of interest can be obtained, avoiding reliance on segmentation and clustering processing of point clouds, and thus preventing accuracy loss generated during the process of dividing obstacle point clouds into polygons. Furthermore, performing collision risk cost assessment based on the driving envelope of the vehicle contour moving along the candidate trajectory enables more accurate calculation of the collision risk cost, especially in narrow scenarios where the vehicle body size is close to the passable area. Utilizing the driving envelope instead of the vehicle body center trajectory line for collision risk cost assessment can calculate the collision risk cost more accurately, thereby supporting more refined trajectory planning based on obstacle avoidance.

In an embodiment, after determining the collision risk cost of each candidate trajectory, the candidate trajectories may also be adjusted and optimized based on the driving envelope to generate the target trajectory that enables the vehicle to avoid obstacles smoothly and amply.

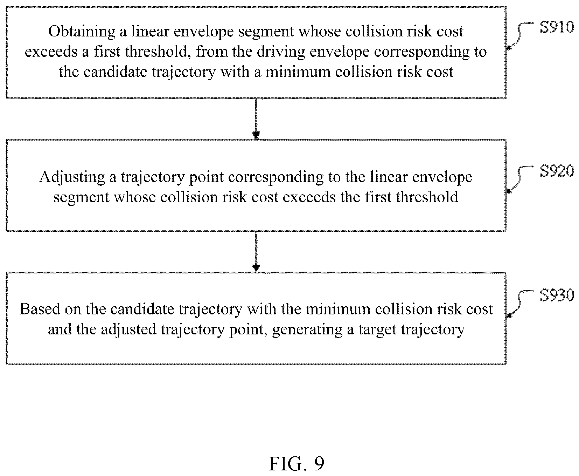

FIG. 9 shows the main steps of generating the target trajectory according to an embodiment. As shown in FIG. 9, in this embodiment, the method further includes the following steps after determining the collision risk cost of each candidate trajectory:

S910, obtaining a linear envelope segment whose collision risk cost exceeds a first threshold, from the driving envelope corresponding to the candidate trajectory with a minimum collision risk cost.

The candidate trajectory with a minimum collision risk cost is the optimal candidate trajectory in the candidate trajectory set. The first threshold can be set according to the severity of the autonomous driving scenario. If the collision risk cost of a linear envelope segment exceeds the first threshold, it indicates that the collision risk cost of that linear envelope segment is higher, meaning that the linear envelope segment is relatively close to an obstacle in the actual scenario (For example, the right sideline of a certain linear envelope segment is relatively close to an obstacle on the right boundary).

S920, adjusting a trajectory point corresponding to the linear envelope segment whose collision risk cost exceeds the first threshold.

The corresponding trajectory points can be adjusted in conjunction with the execution pose error estimated for each trajectory point in the embodiment of generating the driving envelope described above.

Specifically, adjusting the trajectory point corresponding to the linear envelope segment whose collision risk cost exceeds the first threshold includes the following steps: obtaining a collision risk cost of two sidelines of a current linear envelope segment whose collision risk cost exceeds the first threshold; moving the trajectory point corresponding to the current linear envelope segment toward a target direction by a target amount; wherein the target direction is a direction from a sideline of the current linear envelope segment with a higher collision risk cost to a sideline with a lower collision risk cost, and the target amount is related to an execution pose error of the trajectory point corresponding to the current linear envelope segment.

When obtaining the collision risk cost of a sideline of the current linear envelope segment, the highest collision risk cost of the grids traversed by the sideline may be taken as the collision risk cost of the corresponding sideline. If the collision risk costs of the two sidelines of the current linear envelope segment are equal, the opposite direction of the error direction of the execution pose error of the corresponding trajectory point may be determined as the target direction. The target amount may be equal to the execution pose error of the trajectory point; alternatively, the adjusted target amount may be determined based on weighted calculation in conjunction with the execution pose error of the trajectory point and the collision risk costs of the two sidelines of the current linear envelope segment.

S930, based on the candidate trajectory with the minimum collision risk cost and the adjusted trajectory point, generating a target trajectory.

In the candidate trajectory with the minimum collision risk cost, the trajectory points corresponding to the linear envelope segments whose collision risk cost exceeds the first threshold are replaced with adjusted trajectory points to generate the target trajectory.

Thus, by adjusting the easily collision trajectory points (i.e., trajectory points corresponding to linear envelope segments whose collision risk cost exceeds the first threshold) of the candidate trajectory with the minimum collision risk cost, a target trajectory is generated that enables the vehicle to smoothly and amply avoid obstacles, especially at the easily collision trajectory points, while also avoiding the huge computational burden associated with adjusting all trajectory points.

In an embodiment, after determining the collision risk cost of each candidate trajectory, if all candidate trajectories exhibit a high collision risk cost, the assessment basis for the collision risk cost may also be adjusted to obtain more precise collision risk cost assessment results.

Specifically, the method further includes the following steps after determining the collision risk cost of each candidate trajectory: in response to the collision risk cost of all candidate trajectories being higher than a second threshold, generating a projection envelope for an actual projection of the target vehicle moving along each candidate trajectory; based on the projection envelope and the cost grid map, determining the collision risk cost of each candidate trajectory.

When generating the driving envelope, the envelope frame is a square frame that can enclose the vehicle's coverage area. Utilizing a square frame can simplify calculations and substantially accurately represent the area that the vehicle may occupy at the corresponding trajectory point.

In this embodiment, if the collision risk cost of all candidate trajectories exceeds the second threshold, the actual projection of the vehicle is used to replace the envelope frame, and the collision risk cost assessment is performed again for the candidate trajectories, to determine whether the collision risk cost assessment is inaccurate due to the overly conservative calculation method of the envelope frame (the envelope frame includes empty areas on both sides of the front of the vehicle within its coverage area).

In a specific embodiment of generating the projection envelope, for a candidate trajectory, as a first step, based on the execution pose error of each trajectory point thereof and the actual projection of the target vehicle, a projection frame of the target vehicle at each trajectory point of the candidate trajectory is generated. Then, the projection frames are connected (specifically, connecting the left sideline and right sideline of each projection frame, where the left and right sidelines of each projection frame are represented as curves, corresponding respectively to the left and right vehicle body lines of the target vehicle) to generate a projection envelope of the actual projection of the target vehicle moving along the candidate trajectory. The projection envelope includes multiple curved envelope segments, where each curved envelope segment corresponds to a trajectory point of the candidate trajectory, and each curved envelope segment includes the left sideline and right sideline of the corresponding projection frame.

Subsequently, based on the projection envelope and the cost grid map, the collision risk assessment method described in the above embodiments are used to determine the collision risk cost of each candidate trajectory.

In summary, the trajectory collision risk assessment solution of the present disclosure can densely represent obstacle information based on a grid map and enable obstacle avoidance direction decisions, thereby avoiding accuracy loss caused by point cloud segmentation and clustering. Furthermore, performing collision risk cost assessment based on a driving envelope of a vehicle contour moving along a candidate trajectory enables accurate calculation of the collision risk cost, thereby supporting more refined trajectory planning based on obstacle avoidance. Moreover, after evaluating and obtaining the collision risk cost of a candidate trajectory, the candidate trajectory can be further adjusted and optimized to generate a target trajectory for guiding autonomous driving, or if the evaluation is not precise enough, the collision risk cost assessment is performed again based on the projection envelope of the actual projection of the vehicle moving along the candidate trajectory to improve the precision of the collision risk cost evaluation.

An embodiment of the present disclosure further provides a trajectory collision risk assessment apparatus, which can be applied to the trajectory collision risk assessment method as described in any of the above embodiments. Features and principles of the trajectory collision risk assessment method as described in any of the above embodiments are applicable to embodiments of the trajectory collision risk assessment apparatus. In the following embodiments of the trajectory collision risk assessment apparatus, the features and principles of the trajectory collision risk assessment method that have been described will not be repeated.

The trajectory collision risk assessment apparatus can be applied in trajectory planning modules of mobile robots and unmanned vehicles, specifically as a sub-module of the planning module that performs collision risk cost assessment for candidate trajectories to address obstacle avoidance, particularly obstacle avoidance in narrow spaces.

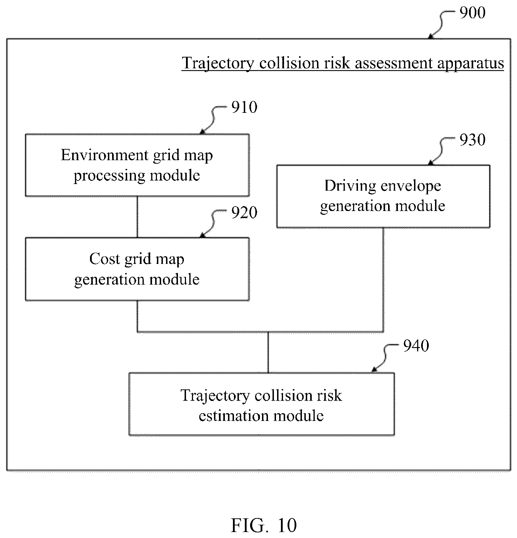

FIG. 10 shows the main modules of the trajectory collision risk assessment apparatus according to an embodiment. As shown in FIG. 10, in this embodiment, the trajectory collision risk assessment apparatus 600 includes:

an environment grid map processing module 610, configured to process an environment grid map based on a driving region of interest to obtain an occupancy grid map , which at least represents obstacle information of the driving region of interest.

a cost grid map generation module 620, configured to process the occupancy grid map according to the obstacle information to obtain a cost grid map, which at least represents a collision risk of the driving region of interest.

a driving envelope generation module 630, configured to obtain a candidate trajectory set, and generate a driving envelope of a target vehicle moving along each candidate trajectory.

a trajectory collision risk estimation module 640, configured to determine a collision risk cost of each candidate trajectory according to the driving envelope and the cost grid map.

In addition, the trajectory collision risk assessment apparatus 600 may further include modules for implementing other process steps of the embodiments of the trajectory collision risk assessment method. For specific principles of the modules, reference may be made to the description of the embodiments of the trajectory collision risk assessment method mentioned above, and will not be repeated.

The trajectory collision risk assessment apparatus of the present disclosure can densely represent obstacle information based on a grid map, facilitates decisions on the direction of obstacle avoidance, and avoids accuracy loss caused by point cloud segmentation and clustering. Furthermore, the trajectory collision risk assessment apparatus performs collision risk cost assessment based on a driving envelope of a vehicle contour moving along a candidate trajectory, and enables accurate calculation of the collision risk cost, thereby supporting more refined trajectory planning based on obstacle avoidance.

An embodiment of the present disclosure further provides an electronic device. The electronic device can be deployed in the trajectory planning modules of mobile robots and unmanned driving vehicles, specifically as a sub-module of the planning module that performs collision risk cost assessment for candidate trajectories to address obstacle avoidance, particularly obstacle avoidance in narrow spaces.

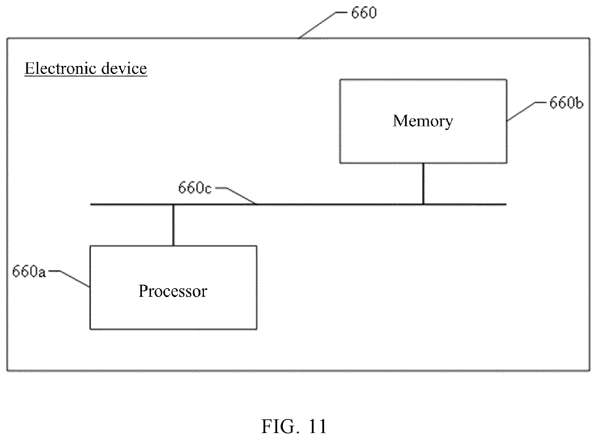

FIG. 11 shows a structure of an electronic device according to an embodiment. As shown in FIG. 11, an electronic device 660 is embodied in the form of a general-purpose computing device. The components of the electronic device 660 may include, but are not limited to: a processor 660a, a memory 660b, a bus 660c for connecting different components (including the memory 660b and the processor 660a), etc.

The memory 660b stores executable instructions, and the executable instructions may be executed by the processor 660a, such that the processor 660a performs the steps of the trajectory collision risk assessment method according to any one of the above embodiments.

The memory 660b may include a readable medium in the form of a volatile memory unit, such as a random access memory (RAM) and/or a cache storage unit, and may further include a read-only memory (ROM).

The bus 660c may represent one or more of several types of bus structures, including a storage unit bus or storage unit controller, a peripheral bus, a graphics acceleration port, a processing unit, or a local area bus using any of a variety of bus structures.

The electronic device 660 may also communicate with one or more external devices, such as other control components of the mobile robots / unmanned driving vehicles where the electronic device 660 is deployed, or a user device. In addition, the electronic device 660 may also communicate with one or more networks (e.g., a local area network (LAN), a wide area network (WAN), and/or a public network, such as the Internet) via a network adapter.

The electronic device 660 of the present disclosure can densely represent obstacle information based on a grid map, facilitates decisions on the direction of obstacle avoidance, and avoids accuracy loss caused by point cloud segmentation and clustering. Furthermore, electronic device 660 performs collision risk cost assessment based on a driving envelope of a vehicle contour moving along a candidate trajectory, and enables accurate calculation of the collision risk cost, thereby supporting more refined trajectory planning based on obstacle avoidance.

An embodiment of the present disclosure further provides a computer-readable storage medium for storing a program, where when the program is executed, the trajectory collision risk assessment method according to any one of the above embodiments is implemented. In some embodiments various aspects of the present disclosure may also be implemented in the form of a program product including program codes, where when the program product is run on a terminal device, the program codes are used to enable the terminal device to perform the trajectory collision risk assessment method according to any one of the above embodiments.

The storage medium of the present disclosure can be executed by the trajectory planning modules of mobile robots and unmanned driving vehicles, and performs collision risk cost assessment for candidate trajectories to address obstacle avoidance, particularly obstacle avoidance in narrow spaces.

When executed by a processor, the storage medium of the present disclosure can densely represent obstacle information based on a grid map, which facilitates decisions on the direction of obstacle avoidance and avoids accuracy loss caused by point cloud segmentation and clustering. Furthermore, when executed by a processor, the storage medium enables accurate calculation of the collision risk cost by performing collision risk cost assessment based on a driving envelope of a vehicle contour moving along a candidate trajectory, thus supporting more refined trajectory planning based on obstacle avoidance.

The storage medium may be a portable compact disc read-only memory (CD-ROM) and include program codes, and may run on terminal devices, such as personal computers. However, the storage medium of the present disclosure is not limited thereto, and may be any tangible medium containing or storing a program which may be used by or in combination with an instruction execution system, apparatus, or device.

The storage medium may be a readable medium or any combination of more readable media. The readable medium may be a readable signal medium or a readable storage medium. An example of the readable storage medium may be, but is not limited to electric, magnetic, optical, electromagnetic, infrared, or semiconductor systems, apparatuses or devices, or any combination of the above. A more specific example of the readable storage medium includes, but is not limited to: an electrical connection having one or more wires, a portable disk, a hard disk, a random access memory (RAM), a read only memory (ROM), an erasable programmable read only memory (EPROM or flash), fiber optics, a portable compact disk read only memory (CD-ROM), an optical storage device, a magnetic storage device, or any suitable combination thereof.

The readable signal medium may include data signals in a baseband or propagated as parts of carriers, in which readable program codes are carried. The propagated data signal may be in various forms, including but not limited to an electromagnetic signal, an optical signal, or any suitable combination thereof. The readable signal medium may also be any readable medium beyond the readable storage media. The readable medium is capable of sending, propagating or transmitting a program used by or in combination with an instruction execution system, apparatus or device or a combination. The program codes contained in the readable signal medium may be transmitted by any appropriate medium, including but not limited to wireless, wired, optical cable, RF, etc., or any appropriate combination of the above.

A program code for executing operations of the present disclosure may be compiled using one or more programming languages. The programming languages include object-oriented programming languages, such as Java and C++, and also include conventional procedural programming languages, such as "C" language or similar programming languages. The program code may be completely executed on a computing device of a user, partially executed on a user device, executed as a separate software package, partially executed on a computing device of a user and partially executed on a remote computing device, or completely executed on a remote computing device or server. In the circumstance involving a remote computing device, the remote computing device may be connected to a user's computing device over any type of network, including a local area network (LAN) or wide area network (WAN), or may be connected to an external computing device (for example, connected over the Internet using an Internet service provider).

The above is a further detailed description of the present disclosure with reference to the specific preferred implementations, and it cannot be considered that the specific implementation of the present disclosure is limited to these descriptions. For those of ordinary skill in the art of the present disclosure, several simple deductions or substitutions can be further made without departing from the concept of the present disclosure, and should be regarded as falling within the scope of protection of the present disclosure.

## Claims

1. A trajectory collision risk assessment method comprising:
processing an environment grid map based on a driving region of interest to obtain an occupancy grid map, which at least represents obstacle information of the driving region of interest;
processing the occupancy grid map according to the obstacle information to obtain a cost grid map, which at least represents a collision risk of the driving region of interest;
obtaining a candidate trajectory set, and generating a driving envelope of a target vehicle moving along each candidate trajectory;
determining a collision risk cost of each candidate trajectory according to the driving envelope and the cost grid map.

2. The trajectory collision risk assessment method of claim 1, further comprising the following steps performed before processing the environment grid map:
based on contour information of the target vehicle and lane information of a current lane, generating a vehicle coverage area for the target vehicle traveling along the current lane;
based on lane information of an adjacent lane of the current lane, expanding the vehicle coverage area to generate the driving region of interest.

3. The trajectory collision risk assessment method of claim 1, wherein each grid of the environment grid map has an initial probability;
wherein processing of the environment grid map comprises:
based on a relationship between a probability of each grid of the environment grid map and a probability threshold, converting the environment grid map into an occupancy grid map, such that in the occupancy grid map, probabilities of at least grids corresponding to obstacles within the driving region of interest and a side boundary of the driving region of interest are set to a target probability value representing a presence of obstacles.

4. The trajectory collision risk assessment method of claim 3, wherein, further comprises the following steps performed after converting the environment grid map into the occupancy grid map:
performing morphological processing on the occupancy grid map, such that probabilities of grids associated with grids corresponding to obstacles within the driving region of interest are set to the target probability value; and
performing smoothing processing on edges of a grid block corresponding to the target probability value, such that probabilities of grids newly added to the grid block after the smoothing processing are set to the target probability value.

5. The trajectory collision risk assessment method of claim 1, wherein the obstacle information comprises: grids corresponding to obstacles within the driving region of interest and a side boundary of the driving region of interest, wherein the grids have a target probability value that represents the presence of an obstacle;
wherein processing of the occupancy grid map comprises:
based on the target probability value, performing a connected component search on the occupancy grid map;
based on connected components obtained from the search, determining a dependency relationship between the obstacles within the driving region of interest and the side boundary of the driving region of interest;
based on the dependency relationship, generating a cost grid map that at least represents a collision risk of the driving region of interest.

6. The trajectory collision risk assessment method of claim 5, wherein determining the dependency relationship between the obstacles within the driving region of interest and the side boundary of the driving region of interest comprises:
using each connected component obtained from the search as a node, establishing edges between the nodes, wherein a cost of each edge is determined based on a shortest distance between the corresponding two connected components;
removing edges whose cost satisfies a cost threshold, and determining the dependency relationship based on a result of the removal.

7. The trajectory collision risk assessment method of claim 5, wherein generating the cost grid map that at least represents the collision risk of the driving region of interest comprises:
obtaining a grid block corresponding to connected components representing obstacles within the driving region of interest;
setting probabilities of grids covered by a projection area, where the grid block is projected toward the associated side boundary, to the target probability value; and
processing the occupancy grid map using a Gaussian kernel to obtain the cost grid map that at least represents the collision risk of the driving region of interest;
wherein in the cost grid map, a collision risk cost of each grid is negatively correlated with a distance from the grid to an obstacle grid corresponding to the target probability value.

8. The trajectory collision risk assessment method of claim 1, wherein generating the driving envelope for the target vehicle moving along each candidate trajectory comprises:
estimating an execution pose error for each trajectory point of the candidate trajectory based on trajectory information of each candidate trajectory;
generating an envelope frame for the target vehicle at each trajectory point of the current candidate trajectory based on contour information of the target vehicle and the execution pose error of each trajectory point of a current candidate trajectory;
connecting the envelope frames to generate a current driving envelope for the target vehicle moving along the current candidate trajectory, the current driving envelope being composed of multiple linear envelope segments.

9. The trajectory collision risk assessment method of claim 8, wherein estimating the execution pose error for each trajectory point of the candidate trajectory comprises:
based on a curvature and a velocity of the candidate trajectory, estimating the execution pose error for each trajectory point of the candidate trajectory by an autoregressive moving average model.

10. The trajectory collision risk assessment method of claim 1, wherein the current driving envelope for the target vehicle moving along a current candidate trajectory comprises multiple linear envelope segments, each linear envelope segment corresponding to a trajectory point of the current candidate trajectory;
wherein determining the collision risk cost of each candidate trajectory comprises:
projecting the current driving envelope onto the cost grid map;
based on the collision risk cost of grids traversed by each linear envelope segment of the current driving envelope in the cost grid map, determining the collision risk cost of each linear envelope segment;
based on the collision risk cost of each linear envelope segment of the current driving envelope, determining the collision risk cost of the current candidate trajectory.

11. The trajectory collision risk assessment method of claim 10, wherein determining the collision risk cost of each linear envelope segment comprises taking a highest collision risk cost of grids traversed by each linear envelope segment as the collision risk cost of the corresponding linear envelope segment;
wherein determining the collision risk cost of the current candidate trajectory comprises taking an average collision risk cost of the linear envelope segments of the current driving envelope as the collision risk cost of the current candidate trajectory.

12. The trajectory collision risk assessment method of claim 10, further comprising the following steps performed after determining the collision risk cost of each candidate trajectory:
obtaining a linear envelope segment whose collision risk cost exceeds a first threshold, from the driving envelope corresponding to the candidate trajectory with a minimum collision risk cost;
adjusting a trajectory point corresponding to the linear envelope segment whose collision risk cost exceeds the first threshold;
based on the candidate trajectory with the minimum collision risk cost and the adjusted trajectory point, generating a target trajectory.

13. The trajectory collision risk assessment method of claim 12, wherein adjusting the trajectory point corresponding to the linear envelope segment whose collision risk cost exceeds the first threshold comprises:
obtaining a collision risk cost of two sidelines of a current linear envelope segment whose collision risk cost exceeds the first threshold;
moving the trajectory point corresponding to the current linear envelope segment toward a target direction by a target amount;
wherein the target direction is a direction from a sideline of the current linear envelope segment with a higher collision risk cost to a sideline with a lower collision risk cost, and the target amount is related to an execution pose error of the trajectory point corresponding to the current linear envelope segment.

14. The trajectory collision risk assessment method of any one of claims 1-13, further comprising the following steps performed after determining the collision risk cost of each candidate trajectory:
in response to the collision risk cost of all candidate trajectories being higher than a second threshold, generating a projection envelope for an actual projection of the target vehicle moving along each candidate trajectory;
based on the projection envelope and the cost grid map, determining the collision risk cost of each candidate trajectory.

15. A trajectory collision risk assessment apparatus applied to the trajectory collision risk assessment method of any one of claims 1-14, wherein the apparatus comprises:
an environment grid map processing module, configured to process an environment grid map based on a driving region of interest to obtain an occupancy grid map , which at least represents obstacle information of the driving region of interest;
a cost grid map generation module, configured to process the occupancy grid map according to the obstacle information to obtain a cost grid map, which at least represents a collision risk of the driving region of interest;
a driving envelope generation module, configured to obtain a candidate trajectory set, and generate a driving envelope of a target vehicle moving along each candidate trajectory;
a trajectory collision risk estimation module, configured to determine a collision risk cost of each candidate trajectory according to the driving envelope and the cost grid map.

16. An electronic device comprising:
a processor;
a memory configured to store executable instructions of the processor;
wherein the processor is configured to execute the steps of the trajectory collision risk assessment method of any one of claims 1-14 by executing the executable instructions.

17. A computer-readable storage medium used for storing program, wherein the trajectory collision risk assessment method of any one of claims 1-14 is realized when the program is executed by a processor.
